(19) Europäisches Patentamt
European Patent Office
Office européen des brevets

(11) EP 2 484 726 A1

(12) **EUROPEAN PATENT APPLICATION**

(43) Date of publication:
**08.08.2012 Bulletin 2012/32**

(21) Application number: **11153680.1**

(22) Date of filing: **08.02.2011**

(51) Int Cl.:
***C09D 5/16*** (2006.01) ***C09D 7/12*** (2006.01)
***B05D 5/08*** (2006.01) ***B08B 17/06*** (2006.01)
***C09K 3/14*** (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Max-Planck-Gesellschaft zur Förderung der Wissenschaften e.V.**
**80539 München (DE)**

(72) Inventors:
- **Vollmer, Doris**
  **55118 Meinz (DE)**
- **Butt, Jurgen**
  **57223 Kreuztal (DE)**
- **Klapper, Markus**
  **55128 Meinz (DE)**
- **D'Acunzi, Maria**
  **4800 Verviers (BE)**
- **Mammen, Lena**
  **55118 Mainz (DE)**
- **Xu, Deng**
  **55131 Mainz (DE)**

(74) Representative: **Stolmár Scheele & Partner**
**Blumenstraße 17**
**80331 München (DE)**

(54) **Mechanical stable, transparent, superhydrophobic, and oleophobic surfaces made of hybrid raspberry-like particles**

(57) The invention relates to a layer formed of raspberry-like particles linked to each other by bridges formed between adjacent raspberry-like particles thereby forming a network of raspberry-like particles, said raspberry-like particles comprising a core with a core surface, said core having a first diameter, wherein on the core surface are located secondary particles having a secondary particle surface, said secondary particles having a second diameter of a smaller size than the first diameter, wherein the bridges linking said raspberry-like particles to each other to form a raspberry-like particle network are composed at least partially of an inorganic material. Further, the invention relates to a method for obtaining such layer and its use.

EP 2 484 726 A1

## Description

The invention relates to a layer of raspberry-like particles as well as to a method for manufacturing the same.

Superhydrophobic or superoleophobic surfaces are advantageous for convenient and cost-effective maintenance of a variety of surfaces. The peculiarity of such surfaces is that micro- and nano-size structures increase the contact angel of water such that water droplets cannot adhere but roll off immediately. Therefore, superhydrophobic or superoleophobic coatings are self-cleaning and anticorrosive. Lately, many artificial surfaces have been created and investigated with regard to their wetting dynamics, their chemical and mechanical stability, as well as their thermal stability. If the superhydrophobic or superoleophobic surface is even transparent, the range of possible applications can be further expanded to glass-based substrates, such as goggles, windshields and tablet computers. Recently, solar cell panels have been coated, because their efficiency markedly decreases in course of time due to pollution. However, for practical applications the coatings need to be easy to make and to apply, mechanically resistant, and long-term stable. None of the existing methods have yet mastered the challenge of meeting all these criteria.

Especially the mechanical robustness offers a challenge, because the nano-size roughness can easily be destroyed irreversibly. Typically this goes in hand with a decrease of its contact angle and an increase of contact angle hysteresis. Some coatings already lose their superhydrophobicity by finger touching. Poor mechanical stability restricts many superhydrophobic or superoleophobic surfaces step from laboratory to the real application.

Usually, two criteria are applied in defining superhydrophobicity or superoleophobicity. First, the equilibrium liquid contact angle $\theta$ of a superhydrophobic or superoleophobic surface must be larger than 150°. Second, liquid must not adhere to the surface, i.e. droplets must roll off easily. The second condition is related to the contact angle hysteresis $\Delta\theta$ of the surface, the difference between the largest (advancing) and smallest (receding) stable contact angle $\theta_{adv}$ - $\theta_{rec}$. The maximum lateral force $F_{lat}$ that a distorted droplet can build up depends on $\theta_{adv}$ and $\theta_{rec}$ as

$$F_{lat} \propto \cos\theta_{rec} - \cos\theta_{adv}$$

which can be approximated for small hysteresis as $F_{lat} \propto \Delta\theta \sin\theta$. In many cases, damage and contaminations do not dramatically decrease the equilibrium contact angle $\theta$ of a non-wetting surface but do decrease the receding angle $\theta_{rec}$ and so cause a large hysteresis, affecting the rolling behavior of liquid droplets due to a larger $F_{lat}$.

To describe superhydrophobicity Wenzel, Ind. Eng. Chem., 1936, 28, 988 - 994, as well as Cassie and Baxter, Trans. Faraday Soc., 1944, 40, 0546 - 0550, described two different hydrophobic states that nowadays are referred to as the "Wenzel-state" and the "Cassie-state", respectively.

In the Wenzel state the solvent surrounds the surface asperities and also wets the depressions in between, leading to an increase in actual contact area. In the Wenzel state, the contact angle can be as high as 150° but the droplet does not roll off, i.e. the surface is neither superhydrophobic nor superoleophobic. In the Cassie state, a droplet is suspended on the tips of the asperities without filling the niches between them. Thus, the surface contact area is reduced as compared to flat surfaces. Partially the drop is in contact with air trapped in the niches. The contact angle then is an average between the contact angle on the surface and on air. The contact angle in the Cassie state can be higher than 150° and the droplet easily rolls off. Hence, droplets in the Cassie state exhibit self-cleaning properties. Most surfaces that are superhydrophobic are not superoleophobic, i.e. water rolls off, but organic liquids adhere to the surface.

Artificial superhydrophobic surfaces are generally prepared by a two-step method. First, a surface with micro- or nanosized roughness is created by lithography or by deposition of micro- or nanomaterials. Subsequently, molecules with a low surface energy are deposited to provide water-repelling properties.

X.Y.Ling, I.Y.Phang, G.J. Vansco, J. Huskens and D.N. Reinhoudt, Langmuir 2009, 25, 3260-3263, describe stable and transparent superhydrophobic nanoparticle films created by assembling unfunctionalized $SiO_2$-particles onto a self-assembled monolayer (SAM)-covered substrate by dipping the substrate into the nanoparticle solution, followed by 1H,1H,2H,2H-perfluorodecyltriethoxysilane (PFTS) gas-phase deposition. To increase mechanical integrity of the nanoparticle film upon wear, the films were sintered in a furnace at 900 - 1.100 °C for 30 - 120 min. in an $O_2$-atmosphere.

T.Verho, C. Bower, P. Andrew, S. Franssila, O. Ikkala and R.H.A.Ras, Adv.Mater. 2011, 23, 673-678, give a short overview of recent advances in developing mechanically resilient superhydrophobic surfaces and review the approaches that can be taken to avoid degradation due to contamination. An approach to improve mechanical durability is to use roughness at two length scales to ensure that a stable Cassie state remains even after some surface features are worn away. Such morphology involves robust microscale bumps that provide protection to a more fragile nanoscale roughness that is superimposed on the larger pattern.

US 2010/0203287 A1 describes superhydrophobic coatings made by the combustion chemical vapor deposition (CCVD) technique. In the CCVD process precursors, which are metal bearing chemicals used to coat an object, are dissolved in a solvent, which typically also acts as the combustible fuel. This solution is atomized to form submicron

droplets. These droplets are then entrained in an oxygen-containing stream to the flame where they are combusted. A substrate is coated by simply drawing it over the flame plasma. The heat from the flame provides energy required to evaporate the ultrafine droplets and for the precursors to react and to vapor deposit on the substrate. The surface temperature, motion speed, and concentration needs to be high enough to not grow a dense structure but not so high as to make a powdery, poor adhesion layer. When depositing a silica based layer, the coating is normally very hydrophilic. To increase water contact angle, the coated specimens are surface treated with a chemical, e.g. a fluorinated silane, to change the silica from hydrophilic to hydrophobic. In situ annealing by a solvent flame or post-deposition heat treatment in an oven is employed to improve the coatings' physical properties, especially their durability.

Raspberry-like particles are promising candidates to make superhydrophobic surfaces. The term "raspberry-like particles" refers to a topography of their surfaces with nano-sized secondary spheres attached to a considerably larger primary particle. If the raspberry-synthesis is based on a template technique the size and the roughness of the raspberry-like shell can be tuned by the surface properties of the underlying core. In case of polystyrene-silica particles the number of attached silica particles can - for example- be tuned by the amount of acrylic acid added to the soap-free emulsion polymerization. The size of the silica spheres can be calculated from the amount of tetraethoxysilane used in the successive Stöber reaction.

M. D'Acunzi, L. Mammen, M. Singh, X. Deng, M. Roth, G.K. Auernhammer, H.-J. Butt and D. Vollmer, Faraday Dicuss., 2010, 146, 35-48, report an improved synthesis for hybrid raspberry-like particles and a method for obtaining superhydrophobic films of good mechanical stability. Polystyrene spheres with a diameter of 400 nm - 1 μm are decorated with silica colloids < 100 nm in size, thus introducing surface asperities on a second length scale. To improve mechanical resistance, the polystyrene core and attached silica colloids are coated with a smooth silica shell of 10 nm to 40 nm thickness. The raspberry-like particles are dispersed in water and monolayers are prepared by dip-coating or multilayers by drop casting. Although mechanically stable, the shells are porous enough to allow for leakage of molten or dissolved polystyrene from the core. Exposure to tetrahydrofuran vapor causes polystyrene to leak out of the cores and to form polymer bridges between the particles. The bridges formed are not massive but are more formed by an entanglement of polymer molecules leaking out of the shell of the raspberry-like particles or being present as a small polymer particle in the space between adjacent raspberry-like particles. The polymer bridges therefore tend to rupture when experiencing mechanical or thermal stress. However, bridge formation results in surfaces with improved mechanical properties. Finally, the silica surface is hydrophobized by chemical vapor deposition of trichlorosilane.

Although mechanical stability of layers of raspberry-like particles linked by polystyrene bridges is quite promising further development must be achieved to provide superhydrophobic or superoleophobic layers which withstand wear experienced in every-day use.

The problem to be solved by the invention therefore is to provide a layer formed of raspberry-like particles of high mechanical stability that may also allow high transparency, when used on a substrate e.g. for windows or goggles.

This object is achieved by a layer according to claim 1 formed of raspberry-like particles linked to each other by bridges formed between adjacent raspberry-like particles wherein said bridges are composed at least partially of an inorganic material. Preferred embodiments of the layer are defined in the depending claims.

According to the invention the raspberry-like particles are linked to each other by bridges comprising an inorganic material. The inorganic material is resistant to temperatures above 200 °C and, therefore, the bridges do not soften when experiencing temperatures above room temperature. Weakening of the network formed of raspberry-like particles therefore is avoided or at least reduced. Further, the bridges comprising inorganic material are quite rigid, thereby imposing high mechanical stability to a layer of raspberry-like particles. The bridges according to an embodiment may be formed of pure inorganic material or according to another embodiment may be formed of a composite material comprising an inorganic material and an organic material.

The invention therefore is directed to a layer of raspberry-like particles linked to each other by bridges formed between adjacent raspberry-like particles thereby forming a network of raspberry-like particles, said raspberry-like particles comprising a core with a core surface, said core having a first diameter wherein on the core surface are located secondary particles having a secondary particle surface, said secondary particles having a second diameter of a smaller size than the first diameter. According to the invention the bridges linking said raspberry-like particles to form a network of raspberry-like particles are composed at least in part of an inorganic material.

A raspberry-like particle comprises a core which may be filled or may be hollow and which is surrounded by secondary particles.

In an embodiment in which the core is filled, the core forms a primary particle and the secondary particles are arranged on the surface of the primary particle.

In an embodiment wherein the core of a raspberry-like particle is hollow the core surface is defined by the inner surface of a shell formed by secondary particles and situated towards the center of the raspberry-like particle.

The core has a first diameter. The first diameter is understood to be the maximum diameter of the core, i.e. a distance between two sites on the core surface the farthest away from each other. In an embodiment, wherein the core has the form of a sphere, the maximum diameter of the core corresponds to two times the radius of the sphere.

The core preferably has a rounded shape and preferably has no edges or corners. According to an embodiment, the core takes the shape of a sphere. However, besides the shape of a sphere the core may also take other geometrical forms and may have e.g. an ellipsoidal cross-section. The core also can have a more complex shape. According to an embodiment the core comprises at least two sphere-like forms that share a common surface or section where the sphere-like forms are attached to each other to form a dumbbell-like structure. The sphere-like forms can have the same size or can have a different size.

The maximum diameter of the core preferably is selected within a range of 100 nm to 10 μm, according to a further embodiment within a range of 200 nm to 5 μm, according to a further embodiment within a range of 400 nm to 2 μm, and according to a still further embodiment within a range of 300 nm to 1 μm. The particle size distribution of the cores of raspberry-like particles comprised in the layer of raspberry-like particles may be monodisperse or may be polydisperse.

The size of the core may be determined e.g. from a picture taken by transmission electron microscopy (TEM). The size of the core may also be determined by determination of the size of polymer particles used in the raspberry-like particle synthesis as explained further below.

In case of an embodiment, wherein the core of the raspberry-like particle is filled, the core preferably is filled with a polymer, e.g. a copolymer of styrene and acrylic acid. Details of suitable polymers are provided further below.

On the core surface are located secondary particles of a smaller size than the core.

The secondary particles have a second diameter which corresponds to the maximum diameter of a secondary particle. The second diameter corresponds to a distance between two sites on the secondary particle surface the farthest away from each other.

According to a preferred embodiment the secondary particle has the form of a spherical cap and the base radius of the cap corresponds to half the maximum diameter of the secondary particle

Secondary particles can grow together during their synthesis. If only part of the secondary particles are grown together the diameter of isolated particles should be considered. Otherwise the maximum diameter corresponds to the distance between the centers of adjacent raspberry-like particles.

The maximum diameter of the secondary particles is according to an embodiment less than half of the maximum core diameter, according to a further embodiment is less than a fifth of the maximum core diameter, and according to a still further embodiment is less than a tenth of the maximum core diameter. According to a further embodiment the maximum diameter of the secondary particles is at least 20 μm. Preferably, the maximum diameter of the secondary particles is selected within a range of 20 nm to 300 nm, according to a further embodiment is selected within a range of 20 to 200 nm and according to a still further embodiment is selected within a range of 40 to 100 nm. According to a preferred embodiment, the maximum diameter of the secondary particles corresponds to two times the base radius of a cap formed by the secondary particles on the core surface.

All secondary particles may have about the same maximum diameter, i.e. all secondary particles have about the same size. However, it is also possible that the secondary particles have different size, $x_i$. In that case the standard deviation $\sigma$ should be below $\sigma < 0.8\ \mu$, where $\mu$ denotes the average diameter of the isolated secondary particles and $n > 5$ the number of secondary particles considered.

$$\sigma = \sqrt{\frac{1}{n-1}\sum_{i=1}^{n}(x_i - \mu)^2}$$

The secondary particles have a rounded shape and according to a preferred embodiment may take the form of a spherical cap and according to a particular embodiment the form of a hemisphere. Other geometric forms, however, are also possible for the secondary particles, e.g. an ellipsoidal form. Preferably, the surface of the secondary particles does not comprise edges or corners. According to an embodiment, the curvature of the secondary particles surface is larger than the curvature of the core surface.

The secondary particles may be arranged on the core in close contact to each other or even partially grown together or may be in distant relationship to each other. The secondary particles may be distributed on the core surface in a regular manner. However, usually the secondary particles are distributed irregularly on the core surface. According to a preferred embodiment the number of secondary particles arranged on the core surface is selected such that less than 90 % of the core surface is covered by secondary particles, according to an embodiment less than 80 % of the core surface is covered by secondary particles, according to a still further embodiment less than 70 % of the core surface is covered by secondary particles and according to a still further embodiment less than 60 % of the core surface is covered

by secondary particles. To obtain superhydrophobicity or superoleophobicity it is essential that roughness of different size is present of the layer surface. According to an embodiment, at least 5 % of the core surface is covered by secondary particles, according to a further embodiment at least 10 % of the core surface is covered by secondary particles and according to a still further embodiment at least 20 % of the core surface is covered by secondary particles. The percentage refers to a core surface as obtained without presence of secondary particles.

According to the invention, the raspberry-like particles are linked to each other by bridges comprising inorganic material to thereby form a network of raspberry-like particles. The bridges preferably are formed by a chemical reaction and therefore have a much denser structure than organic bridges as hitherto known for linking adjacent raspberry-like particles. A chemically formed bridge is understood to be a bridge formed of a compound which compound can be synthesized by a chemical reaction. A chemically formed bridge can be distinguished from a physically formed bridge which is based e.g. on van-der-Waals forces or entanglements between asperities present on the surface of adjacent raspberry-like particles.

A raspberry-like particle may be bound to a neighbored raspberry-like particle by a single bridge or by several bridges. It is not necessary that an individual raspberry-like particles is linked by a bridge to each of its neighbored raspberry-like particles but it is sufficient to obtain a stable network by providing bridges between an individual raspberry-like particle and some of its neighbored raspberry-like particles, e.g. at least two or at least three of the neighbored raspberry-like particles and to link said individual raspberry-like particle to the remaining neighbored raspberry-like particles indirectly via other raspberry-like particles. By the presence of the bridges a network is formed which imposes high mechanical strength to the layer of raspberry-like particles.

The bridges formed between neighbored raspberry-like particles preferably have a length of several nanometers to several micrometers, e.g. 10 nm to 2 μm, preferably 40 nm to 400 nm, and a thickness of preferably less than 2 μm. According to an embodiment, the bridges have a thickness of up to several tens of nanometers, e.g. 50 nm to 1 μm, preferably 100 to 800 nm. The length of a bridge is understood to be the distance as measured between the core surfaces of raspberry-like particles adjacent in the layer. The thickness of the bridges is determined at the center of the bridge along an axis perpendicular to the axis taken to determine the length of the bridge. The length and thickness of a bridge can be determined e.g. from a picture taken by TEM.

For obtaining superhydrophobicity or superoleophopicity it is important to provide roughness of at least two different scales on the layer surface. The first roughness scale is provided by the curvature of the core and the second roughness scale is provided by the secondary particles. The bridges formed between adjacent raspberry-like particles are preferably formed such, that roughness in both scales is still present after formation of the bridges.

The bridges are formed of a material comprising an inorganic material.

Said inorganic material preferably is a metal oxide or a mixture of metal oxides. Suitable metals comprised in the metal oxides are metals of the fourth and fifth main group of the periodic systems of the elements. Particularly preferred metals are titanium and silicium.

According to a preferred embodiment, the inorganic material is a polymer inorganic material wherein the atoms forming the polymer are linked to each other by covalent bonds. A particularly preferred polymer inorganic material is silica. Silica may be present in a completely dehydrated form but in most cases is partially hydrated, i.e. hydroxyl groups are present in the structure and the structure comprises sections formed of linear chains or fractal-like structures.

The bridges may be formed of a pure inorganic material or from a composite of an organic material and an inorganic material, e.g. from an organic polymer which is covered partially or completely by an inorganic material.

According to a preferred embodiment, the bridges are purely formed of inorganic material.

According to a preferred embodiment the bridges are formed from the same material as the secondary particles of the raspberry-like particles. According to a particularly preferred embodiment the bridges comprise or are essentially formed from silica. According to an embodiment, the silica is formed from silicon atoms that form siloxane bonds with two to four neighbours. The remaining bonds of the silicon atom can e.g. be saturated by an ethoxy or silanol group.

According to an embodiment that will be described in more detail further down, the bridges arranged between adjacent raspberry-like particles are formed by depositing e.g. silica on the surface of raspberry-like particles thereby forming a shell comprising said secondary particles. According to such embodiment, the bridges and shells situated around the core and comprising secondary particles form a continuum. According to an embodiment, the shell may be porous, with a pore size of preferably below 40 nm.

According to an embodiment, the bridges and the secondary particles are formed of the same inorganic material.

According to a further preferred embodiment, on the surface of the secondary particles are located tertiary particles wherein the tertiary particles have a third diameter and the third diameter has a smaller size than the second diameter. The third diameter is defined as the distance between two sites of the tertiary particle surface the farthest away from each other. The tertiary particles have a size that is still smaller than the size of the secondary particles.

The tertiary particles preferably have a rounded shape. However, due to the small size and their preferred formation by chemical vapor deposition (CVD), such tertiary particles may have an almost fractal-like shape.

A sphere which would embed the tertiary particle has a curvature of a third size, wherein the curvature of a

third size is larger than the curvature of a second size. Preferably, the surface of the tertiary particles has a rounded shape and preferably has no edges or corners. The tertiary particle ideally may take the form of a hemisphere but other geometric shapes are also possible, e.g. a spherical cap. The tertiary particles preferably have a maximum diameter in a range of 1 to 30 nm, further preferred within a range of 5 to 20 nm. By the presence of tertiary particles the contact angle can be further increased and the contact angle hysteresis be decreased.

The tertiary particles preferably are made of an inorganic material, more preferably of a metal oxide or a mixture of metal oxides and most preferred are made of silica. The same inorganic materials may be used as already described for the secondary particles and the bridges. According to a preferred embodiment the tertiary particles are made of the same inorganic material as the bridges and/or the secondary particles.

The raspberry-like particles according to this embodiment comprise geometrical forms of three different length-scales. The first geometrical form having a first length-scale is formed by the core, the second geometrical form having a second length-scale smaller than the first length-scale is formed by the second particles attached to the core surface, and the third geometrical form having a third length-scale smaller than the second length-scale is formed by the tertiary particles attached to the second particle surface and the core surface.

The tertiary particles, according to an embodiment, may also be present on bridges formed between neighbored raspberry-like particles. According to this embodiment, the bridges may also comprise an organic material forming a connection between adjacent raspberry-like particles and tertiary particles are then arranged on the structure provided by the organic polymer molecules.

According to a preferred embodiment, the secondary particles are linked to each other by a thin layer to thereby form a, preferably continuous, shell surrounding the core. The shell preferably has a thickness such that roughness provided by the secondary particles is still present. The secondary particles preferably form an integral part of the shell. The shell thickness preferably is selected within a range of 5 to 200 nm, according to a further embodiment within a range of 10 to 100 nm and according to a still further embodiment within a range of 15 to 50 nm. The shell thickness is determined at a position between two secondary particles. A suitable method for determination of shell thickness is e.g. TEM.

Small pores may be provided in the shell such that transport processes may occur from an interior core space of the raspberry-like particle to the particle surroundings and vice versa. Such transport processes may be used for removing a filled core in a calcination step or to leak out polymer from the core to form bridges to a neighbored raspberry-like particle.

According to another embodiment, the secondary particles may partially growth together during their synthesis. In that case the surface coverage of the core surface by secondary particles can be as high as 95%, according to an embodiment between 70% and 90%. According to this embodiment the linkage of the particles by a thin layer is not necessary to obtain a continuous shell surrounding the core, although it is advantageous to increase mechanical stability of the shell. Size of the secondary particles is preferably selected within a range of 10 to 100 nm, according to a further embodiment within a range of 20 to 60 nm. A suitable method for determination of particle size and shell thickness is e.g. TEM.

Small pores are provided in the shell between neighboring secondary particles such that transport processes may occur from an interior core space of the raspberry-like particle to the particle surroundings. Such transport processes may be used for removing a filled core in a calcination step or by dispersing the raspberry-like particles in a good solvent for the core. According to an embodiment the pore size is less than 100 nm, according to a further embodiment is less than 40 nm and according toa still further embodiment is at least 1 nm according to a further embodiment at least 5 nm.

Self-cleaning is desirable for many applications, including windows and solar cells. However, both applications need the coatings to be transparent. In general, transmittance decreases with increasing surface roughness, especially when the roughness exceeds the wavelength of light.

According to a further embodiment the raspberry-like particles are hollow. The secondary particles, in particular when partially grown together or integrated in a shell surrounding the core, form a quite stable shell surrounding the core of a raspberry-like particle. It therefore is possible to remove material, e.g. a spherical core formed of organic polymers, used as a template for forming the shell of secondary particles such that the core of the raspberry- like particles is hollow. Since the asperities formed by the secondary particles on the outer shell surface are small and preferably are smaller than the wavelength of visible light, a layer formed of hollow raspberry-like particles is transparent to visible light. The layer thickness may be up to 100 raspberry-like particles, according to an embodiment up to 50 raspberry-like particles without considerably reducing the transparency or color of an underlying substrate. This embodiment is very suitable when using transparent substrates, e.g. a computer display or a display of a tablet computer, solar cells or a smart phone.

The shell thickness of the hollow particles (sum of the diameter of the secondary particles, plus the thickness of the thin layer in which the secondary particles may be integrated to form a shell) preferably is selected within a range of 10 to 150 nm, according to a further embodiment is selected within a range of 20 to 100 nm, and according to a still further embodiment is selected within a range of 30 to 70 nm.

As already described above, the shell surrounding the core may comprise small pores of a diameter of preferably less than 100 nm, according to a further embodiment of less than 40 nm. According to a further embodiment the raspberry-like particles are hollow and the shell has pores of a size in the order of a few tens of nanometer. Advantageously such embodiment has antifogging properties when used to form a layer comprising a network of raspberry-like particles.

In an embodiment as described above, wherein the shell is formed by hollow raspberry-like particles obtained by growing secondary particles together and wherein further the core is removed afterwards, e.g. by a calcination process, to obtain hollow raspberry-like particles, the thickness of the shell formed by secondary particles is preferably selected within a range of 20 to 100 nm, and according to a still further embodiment is selected within a range of 30 to 70 nm.

It has been shown that destructive interference between light reflected from the particle-substrate and the air-particle interfaces can give rise to low reflectivity, respectively to high transmission. Both depend on the particle diameter, shell thickness, and refractive index, which can be decreased by increasing nanoporosity. An embodiment, wherein the raspberry-like particles comprise secondary particles that have been grown together to form a shell, optionally with a thin layer of inorganic material deposited on the secondary particles, is in particular suitable for applications in which transparency of the layer comprising a network of raspberry-like particles is required.

The layers formed of a network of raspberry-like particles may be used also as a superwettable surface. According to this embodiment, the surface of the raspberry-like particles is formed by a polar material, e.g. silica.

According to a preferred embodiment, the layer has superhydrophobicity or superoleophobicity.

The hydrophobicity or oleophobicity of the layer formed of raspberry-like particles may be modified by depositing a hydrophobic or oleophobic lining onto the raspberry-like particles.

Superoleophobicity requires rougher surfaces than superhydrophobicity or hang-overs. Increased roughness can be achieved according to an embodiment by providing raspberry-like particles also comprising tertiary particles on their surface as described above. The roughness can also be increased by mixing raspberry-like particles and polymer particles of similar or different size and removing the polymer particles before or after bridge formation e.g. by calcinations of by dissolving them using a good solvent for the polymer.

To obtain such lining on the raspberry-like particle surface, hydrophobic or oleophobic groups may be bound chemically to the raspberry-like particle surface. An exemplary hydrophobic and oleophobic group is a perfluorated or semifluorinated alkyl group which comprises according to an embodiment 3 to 20 carbon atoms. The hydrophobic or oleophobic groups preferably are bonded to the raspberry-like particle surface by a chemical bond, e.g. via a silane group. A suitable fluorinated regent is e.g. 1H,1H,2H,2H-perfluorodecyltriethoxysilane (PFTS) which can be applied to the raspberry-like particle surface by gas-phase deposition.

According to another embodiment the hydrophobic or oleophobic layer may be formed by a hydrophobic or oleophobic compound deposited onto the raspberry-like particle surface without being chemically bound to the raspberry-like particle surface. Suitable compounds are e.g. fluorinated or semifluorinated alkyl polymers.

According to a still further embodiment, semi- or perfluorinated polymers with side-standing silane or siloxane groups are used.

The layer formed from a network of raspberry-like particles according to the invention may be used as such, e.g. as a sensitive element in a sensor.

According to a preferred embodiment, the layer formed from a network of raspberry-like particles according to the invention is used as a coating of a substrate.

The substrate can be chosen arbitrarily and may be e.g. a glass plate or a transparent plastic material but other materials may be used as well, e.g. metals, polymers or ceramics. The substrate may be flexible and may take e.g. the form of a foil or of a thin sheet of plastic as used e.g. for displays. However, the substrate can also be rigid and may be e.g. the surface of a solar panel. The substrate surface may be flat or may be curved and may comprise edges and corners. The substrate surface may be smooth or may be corrugated. The substrate surface can be even and continuous and may be e.g. the lacquer surface of a car or can be discontinuous and may be the surface e.g. of a fabric. Basically, no restrictions apply to the form of the substrate and the structure of the substrate surface, as long as sufficient space is available for fixing raspberry-like particles to the substrate surface. The substrate preferably is solid and according to preferred embodiments may be rigid or flexible but according to a further embodiment can even be a polymer melt.

The substrate surface is covered by a layer comprising a network of raspberry-like particles. The layer comprising a network of raspberry-like particles may comprise additional components, e.g. polymer particles, as described above. The substrate surface may be covered completely by a layer comprising a network of raspberry-like particles. According to an embodiment only part of the substrate surface is covered by said layer of a network of raspberry-like particles. This part of the substrate surface may by a single section on the substrate surface. However, it is also possible that several sections covered with a layer comprising a network of raspberry-like particles are arranged on the substrate surface.

The layer comprising a network of raspberry-like particles may be fixed to the substrate surface by physical interactions, e.g. van-der Waals-forces, electrostatic or mechanical interactions wherein asperities on the substrate surface are entangled by asperities present on the surface of a raspberry-like particle and vice versa. However, it is also

possible that fixation of the layer of raspberry-like particles on the substrate surface is achieved by the rigid structure of the network formed of the raspberry-like particles without any direct bonding formed between the substrate surface and the layer of raspberry-like particles.

According to a further embodiment fixation of the layer formed by a network of raspberry-like particles is achieved by direct bonding between the substrate surface and adjacent raspberry-like particles.

To achieve a bonding of a raspberry-like particle to the substrate surface, a polymer bridge may be formed between the substrate surface and the surface of an adjacent raspberry-like particle. According to another embodiment, a fixation layer formed of a suitable compound, e.g. a polymer film, may be provided on the substrate surface and a layer of raspberry-like particles is embedded at least partially in said fixation layer.

According to a preferred embodiment fixation of the layer formed of raspberry-like particles on a substrate surface is performed by chemical bonding. A chemical bonding is understood to be a bonding by some compound situated between the substrate surface and the surface of a raspberry-like particle, e.g. in the form of a bridge formed of said chemical compound, thereby effecting a fixation of the raspberry-like particle on the substrate surface. Preferably, the chemical bonding of the layer of raspberry-like particles is obtained by a chemical reaction, particularly preferred by formation of a bridge comprising inorganic material between the substrate surface and adjacent raspberry-like particles deposited on said substrate surface.

According to a preferred embodiment, bridges formed of a material comprising an inorganic material are arranged between the substrate surface and adjacent raspberry-like particles situated on said substrate surface. The inorganic material may be different from the inorganic material of bridges formed between neighbored raspberry-like particles or preferably is the same material as used for the bridges between neighbored raspberry-like particles.

At least sections of the substrate surface are covered by a layer comprising a network of raspberry-like particles. The layer may comprise a monolayer of raspberry-like particles. The raspberry-like particles may be densely packed within the layer. However, superhydrophobicity or superoleophobicity is achieved already with a lower coverage of the substrate surface. According to an embodiment, in the area or section covered by raspberry-like particles, in particular a monolayer of raspberry-like particles, where the projected area should cover at least 10% of the underlying substrate surface and according to a further embodiment between 20 % and 60 % of the underlying substrate surface is covered by raspberry-like particles.

According to a preferred embodiment, the layer formed of raspberry-like particles comprises several individual layers of raspberry-like particles stacked upon each other. An individual layer of raspberry-like particles is understood to be a layer formed of raspberry-like particles which comprises in a direction of its height only a single raspberry-like particle. According to a particular preferred embodiment, the layer comprises at least 2 individual layers, according to a further embodiment at least 20 individual layers of raspberry-like particles, and according to a further preferred embodiment at least 50 individual layers of raspberry-like particles.

According to an embodiment, wherein the layer is formed of hollow raspberry-like particles and the substrate is transparent, in particular to visible light, the layer formed of raspberry-like particles comprises less than one to 100 individual layers of raspberry-like particles. According to a particular preferred embodiment, the layer formed of raspberry-like particles comprises between 0.5 and 50 individual layers of raspberry-like particles.

According to a further aspect the invention is directed to a method for manufacturing a layer formed of raspberry-like particles as described above.

According to the method for manufacturing a layer formed of raspberry-like particles as described above

- a substrate with a substrate surface is provided;
- raspberry-like particles are deposited on at least sections of the substrate surface, and
- bridges of a material comprising inorganic material are chemically formed between the raspberry-like particles thereby forming a network of raspberry-like particles.

The raspberry-like particles may be obtained by known methods. According to an embodiment a two-step or three-step procedure is used to obtain raspberry-like particles with several coexisting length-scales.

First, a core is provided as a primary particle which acts as a template for forming a shell of secondary particles. The core preferably is made of an organic polymer and may be obtained by emulsion or dispersion polymerization, preferably soap-free emulsion polymerization.

To facilitate formation of secondary particles, in particular when using a solvent-based synthesis, the polymer preferably is a copolymer wherein at least one of the comonomers carries a functional group that attracts inorganic material, e.g. silica, by van der Waals forces, formation of hydrogen bonds, electrostatic interactions etc. Suitable functional groups are e.g. carboxylic group, hydroxyl group. However, other polar or ionic groups may also be suitable.

The particles forming the core of the raspberry-like particle preferably have a rounded shape, and particularly

preferred have a spheroidal shape. The particles forming the core preferably have a monomodal size distribution, but core particles with a polymodal size distribution are also suitable. The size of the particles forming the core is preferably selected within a range of 100 nm to 10 μm, according to an embodiment is selected within a range of 200 nm to 5 μm, according to a further embodiment is selected within a range of 400 nm to 2 μm, and according to a still further embodiment is within a range of 300 nm to μm.

Suitable monomers for synthesis of a polymer primary particle are e.g. styrene, butadiene, isoprene, methyl (meth)acrylate, acrylonitrile. These monomers are understood to be exemplary only. Other suitable monomers may be used as well.

Suitable co-monomers that carry a functional group that attracts inorganic material, e.g. silica, by van der Waals forces, formation of hydrogen bonds, electrostatic interactions are e.g. (meth)acrylic acid, hydroxyethyl (meth)acrylate, vinylpyridine, vinyl formamide, mercaptopropyl trimethoxysilane. These co-monomers are understood to be exemplary only. Other suitable co-monomers may be used as well. The amount of co-monomers with respect to the monomers is preferably selected within a range of 0.1 to 10 mol%, according to a further embodiment is selected within a range of 1 to 5 mol%.

According to a preferred embodiment, negatively charged polystyrene (PS) particles are synthesized by soap-free emulsion polymerization of styrene with e.g. ammonium-persulfate as initiator and acrylic acid as co-monomer. The amount of acrylic acid is preferably selected within a range of 0.1 to 10 mol% with respect to styrene, according to a preferred embodiment is selected within a range of 1 to 5 mol%.

According to a further embodiment, first non-polar primary polymer particles are synthesized which then are coated by a polar polymer. An exemplary suitable polar polymer is poly vinyl pyridine.

Subsequently, secondary particles are formed on the core surface to obtain raspberry-like particles comprising a polymer core and secondary particles attached to and dispersed on the core surface. The secondary particles preferably have a maximum diameter of 20 to 300 nm, according to an embodiment have a maximum diameter of 20 to 200 nm, and according to a still further embodiment have a diameter of 40 to 100 nm.

In the following, raspberry-like particles comprising a polymer primary particle as a core with secondary particles dispersed on the core surface are designated as "hybrid raspberry-like particles". The secondary particles may be placed on the core surface isolated from each other. According to an embodiment, the secondary particles have a larger size such the secondary particles are attached to each other to form a porous shell around the core.

The secondary particles are preferably formed by a solvent based reaction, e.g. a hydrolysis reaction. A preferred solvent based reaction is the Stöber method. However, formation of the secondary particles by deposition from the gas phase, e.g. by chemical vapor deposition (CVD) is also possible.

According to a preferred embodiment, silica nanoparticles acting as secondary particles are grown on the PS-surface following the Stöber method, that is, formation of silica by hydrolysis and condensation of tetraethoxysilane (TES) catalyzed by ammonia. Besides tetraethoxysilane other organic silanes may be used as well. The reaction rate may be influenced by the size of the alkyl groups comprised in the silane. Groups comprising a higher number of carbon atoms, e.g. propyl or butyl groups, or groups that cause steric hindrances will slow down the reaction rate and therefore will slow down the formation rate of the secondary particles on the core surface.

Silica usually does not grow homogeneously on the polystyrene particles but the surface is decorated with silica particles. The size of the silica particles can be tuned by the amount of tetraethoxysilane and its number by e.g. the amount of comonomer, e.g. acrylic acid, comprised in the polystyrene as a copolymer. Preferably the amount of comonomer, in particular acrylic acid, is preferably selected within a range of 1 to 5 mol%. The number and size can be tuned such that the secondary particles partially grow together. In that case a fixation of the secondary particles by a shell as described further down is advantageous but not necessary.

To prevent the secondary particles from detaching, the hybrid raspberry-like particles according to an embodiment are coated with a thin layer of inorganic material to obtain a shell. In the following raspberry-like particles comprising a shell of secondary particles covered by a thin shell of inorganic material formed around the core are designated as "coated raspberry-like particles". The shell preferably has an average thickness of 5 to 200 nm, according to an embodiment a thickness of 10 to 100 nm, and according to a further embodiment a thickness of 15 to 50 nm. For transparent layers an average shell thickness between 10 and 40 nm is preferable. The average shell thickness $\mu_T$ is determined by TEM.

$T_i$ denotes the shell thicknesses determined at n > 10 different positions of at least 5 different raspberry-like particles.

$$\sigma_T = \sqrt{\frac{1}{n-1} \sum_{i=1} (T_i - \mu_T)^2} <$$

$$0.5\mu_T\sigma_T = \sqrt{\frac{1}{n-1}\sum_{i=1}(T_i - \mu_T)^2} <$$

$$0.5\ \mu_T$$

The shell preferably is continuous but small pores may be present in the shell to allow e.g. removal of the polymer core by calcination in air.

According to a preferred embodiment, the secondary particles are formed of silica particles and the shell is also formed of silica.

Immersing the hybrid raspberry-like particles in a cationic polymer solution, e.g. a polyallylamine hydrochloride (PAH) solution, reverses their surface charge from negative to positive. Therefore, another Stöber reaction performed after this step results in a homogeneous shell whose thickness can be tuned by adjusting the synthesis conditions. The resulting "coated raspberry-like particles" have a polymer core, e.g. a polystyrene core, and a preferably completely closed rough shell of tunable shell thickness. These particles possess high mechanical stability. Smooth shells as thin as 30 nm already show a Young modulus of ~20 GPa, i.e. less than a factor of four below fused silica.

The raspberry-like particles, preferably coated raspberry-like particles, are then deposited onto at least parts of a substrate surface. Parts of the substrate surface may be shielded e.g. by lithographic techniques to prevent adherence of raspberry-like particles on covered sections of the substrate surface. Deposition of the raspberry-like particles may be achieved e.g. by placing a suspension of raspberry-like particles on the substrate surface, e.g. by spraying the suspension onto the substrate surface or by dipping the substrate into the suspension of raspberry-like particles. The solvent may then be removed by evaporation.

To increase roughness of the layer formed of raspberry-like particles, polymer particles may be deposited together with the raspberry-like particles. The size of the polymer particles may be similar or different to the size of the raspberry-like particles and according to an embodiment is selected within a range of 10 nm to 10 μm, according to a further embodiment is selected within a range of 100 nm to 2 μm. The amount of polymer particles may be selected according to the roughness to be achieved and is preferably selected within a range of 1 to 70 vol.%, according to a further embodiment within a range of 20 to 50 vol.%.

The polymer particles can be removed, e.g. by dipping the layer formed of raspberry-like particles in a good solvent for the polymer after fixation of the layer by formation of bridges between adjacent raspberry-like particles. The polymer particles can also be removed by other methods, e.g. in a calcination step. Use of such polymerparticles increases the microscale roughness of the layer formed of a network of raspberry-like particles.

Concurrently with or after deposition of the raspberry-like particles on the substrate surface bridges comprising inorganic material are chemically formed between adjacent raspberry-like particles thereby forming a network of raspberry-like particles.

Several methods may be used to chemically form such bridges between raspberry-like particles.

According to a first embodiment, the bridges comprising inorganic material are formed by chemical vapour deposition of the inorganic material.

According to this embodiment the layer of raspberry-like particles or according to an embodiment the layer formed by a mixture of raspberry-like particles and polymer particles deposited on a substrate surface preferably is dried first. The substrate with the layer of raspberry-like particles is then placed in an atmosphere containing suitable reagents, e.g. a silane and a catalyst. An exemplary silane is tetraethoxysilane and an exemplary catalyst is ammonia. The substrate with the layer of raspberry-like particles or the layer formed by a mixture of raspberry-like particles and polymer particles may be placed e.g. in an exsiccator together with two glass vessels, containing tetraethoxysilane and ammonia. Silica bridges will then be formed between neighboured raspberry-like particles by hydrolysis of tetraethoxysilane vapour. At the same time according to a preferred embodiment tertiary silica particles of nanometer size may be formed on the raspberry-like particle surface and, if present, on the surface of the polymer particles.

According to another embodiment, the bridges between neighboured raspberry-like particles are formed by a composite material comprising an organic polymer and inorganic material. For formation of such bridges, the layer of raspberry-like particles comprising a core formed of a suitable polymer, e.g. a polystyrene-acrylic acid copolymer, is exposed to a suitable solvent, e.g. THF, such that the polymer leaks out of the core of the raspberry-like particles to form bridges to neighboured raspberry-like particles. According to another embodiment the substrate with the layer of raspberry-like particles deposited on at least sections of its surface is heated such that the polymer will melt and leak

out of the raspberry-like particle core.

If required, excess polymer may be removed from the raspberry-like particle surface to uncover secondary particles again. This may be done by a suitable method, e.g. plasma etching.

Silica is then deposited on the polymer bridges and the raspberry-like particle surface, e.g. by chemical vapour deposition of silica in an atmosphere of e.g. tetraethoxysilane and ammonia. Tertiary particles will form on the bridges surface as well as on the surface of the raspberry-like particles. The tertiary particles may grow together, connecting neighbouring raspberry-like particles by a continuous bridge, e.g. a silica bridge.

According to still another embodiment, the bridges of inorganic material are formed by a chemical reaction performed in solution, preferably by hydrolysis of precursor material of the inorganic material, e.g. a silane, e.g. tetraethoxysilane, which hydrolysis may be catalyzed by a suitable catalyst, e.g. ammonia.

According to this embodiment, hybrid raspberry-like particles or coated raspberry-like particles or mixtures of both and polymer particles are dispersed in a solvent, e.g. water or a mixture of water and a suitable alcohol, e.g. ethanol, to form a suspension, a precursor material of the inorganic material, e.g. a silane, e.g. tetraethoxysilane, is dissolved in said solvent, the raspberry-like particles are deposited from said suspension onto the surface of the substrate and the precursor material of the inorganic material is reacted to form a shell and/or bridges of inorganic material between said raspberry-like particles to form a network of raspberry-like particles. A catalyst, e.g. ammonia, may be added to the suspension to accelerate hydrolysis of the silane.

According to a further embodiment, a combined method is used for formation of inorganic bridges between neighboured raspberry-like particles.

In a first step, raspberry-like particles are sedimented from suspension and then the solvent is evaporated. Fixation of the sedimented raspberry-like particles is then achieved by CVD of silica. In a subsequent step further inorganic material, preferably silica, is precipitated from solution using e.g. the Stöber method to form a shell around the cores and/or bridges between neighbouring particles.

To impart superhydrophobicity to the layer formed of a network of raspberry-like particles, according to a preferred embodiment, after formation of the bridges hydrophilic groups are linked to the surface of the network of raspberry-like particles. Preferred hydrophobic groups are fluorinated or semifluorinated alkyl groups, preferably comprising 3 to 500 carbon atoms, according to an embodiment comprising 3 to 100 carbon atoms, and according to a further embodiment comprising 3 to 10 carbon atoms. According to an embodiment, the alkyl groups carry up to eight fluoro atoms. Suitable reagents for attaching hydrophobic groups to the network of raspberry-like particles are e.g. silanes carrying fluorinated or semifluorinated alkyl groups.

According to an embodiment, to obtain superhydrophobic or superoleophobic behaviour, after formation of the bridges amphiphilic copolymers of general formula I are attached to the surface of the raspberry-like particles.

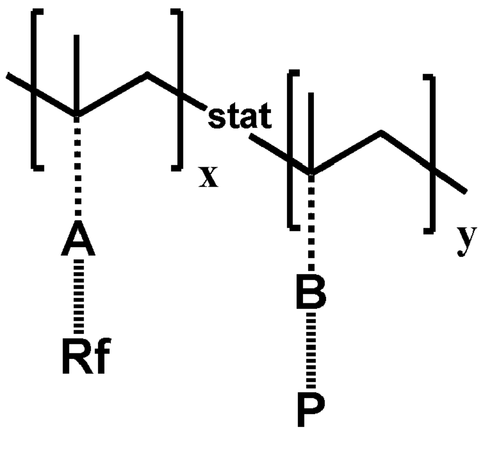

formula I

These copolymers comprise of a composition of polar (**X**) and unpolar (**Y**) monomers. The composition can be in the range of X=0,01-0,995 and y=0,01-0,995, preferable X=0,3-0,01 and Y = 0,7-0,99 , most preferable X=0,15-0,05 and Y= 0,85-0,95.

One of the comonomers comprises a polar group and is linked directly or via a Spacer A to a polymer chain Rf which is able to react or to physically absorb on a surface. Preferable spacers are units of polyethylenoxide and/or propylenoxide, or amino-, mono-, bis- and trisalkoxysilane-, hydroxyl- and acid functions such as phosphonates, sulfonates or carboxylic functions. The spacer A can either be an ester, ether, alkyl or aromatic groups or combinations of them.

The other comonomer comprises non-polar groups and can be connected either directly or via a spacer B to a polymer chain P. Exemplary non-polar groups are perfluorinated or partially fluorinated alkyl or aromatic groups. Spacer B can be an ester, ether, alkyl or aromatic group or comprises a of combination of such groups.

Exemplary polymers suitable for coating the layer formed of a network of raspberry-like particles are:

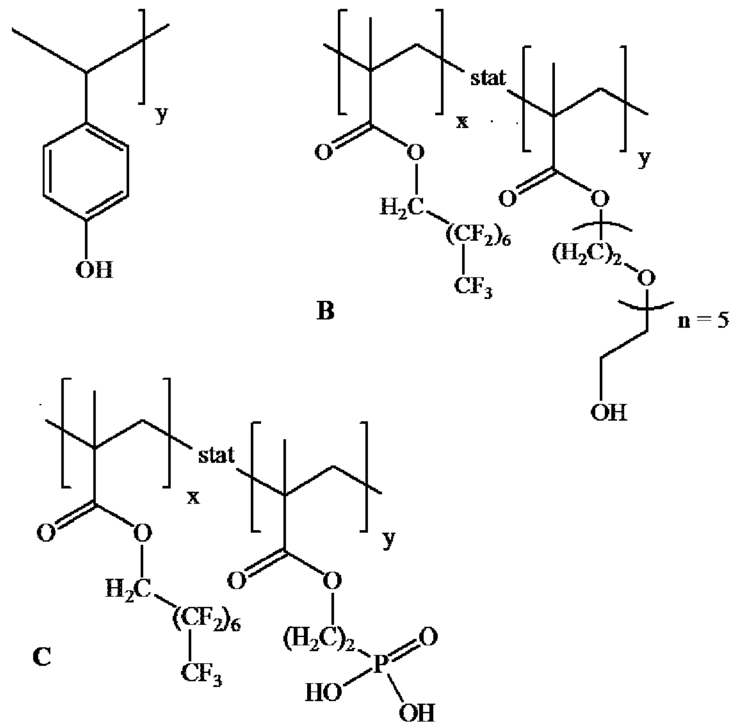

B

C

These statistic copolymers are poly(meth)acrylates substituted with pending semi- or perfluorinated alkyl chains. The fluorination degree may be varied. Preferably, at least 80 % of the hydrogen atoms of the alkyl groups is substituted by fluorine atoms. The polymers bind to the rough surface of the raspberry-like particles.

To bind the polymer to the silica surface of the raspberry-like particle by a chemical bond, an anchor group is provided in the polymer, e.g. a phosphonic acid group.

Hollow raspberry particles may be obtained by calcination of the substrate after formation of the raspberry-like particle network by removal of the polymer core in an oxygen containing atmosphere. Calcination is performed preferably at a temperature in a range of 200 to 1000 °C, according to an embodiment at a temperature in a range of 300 to 500 °C, e.g. in air.

According to a further embodiment, the polymer core is removed from the raspberry-like particle by dissolving the polymer core in a suitable solvent, e.g. tetrahydrofuran, toluene, or cyclohexane. In an embodiment where polymer particles are additionally present in the layer formed by a network of raspberry-like particles, such polymer particles will also be removed by the solvent.

After synthesis of the layer formed of raspberry-like particles linked to each other by bridges formed between adjacent raspberry-like particles thereby forming a network of raspberry-like particles the layer may be removed from the substrate.

The invention will be described in more detail with reference to examples and the attached figures. The figures show:

Fig. 1: a schematic sketch of two raspberry particles linked to each other by a bridge of inorganic material;

Fig. 2a: a sketch of different ways to synthesize raspberry-like particles;

Fig. 2b: SEM and TEM images of hybrid and coated raspberry like particles;

Fig. 3a: a schematic sketch of the deposition of a raspberry-like particle layer onto a substrate;

Fig. 3b: a schematic sketch of the apparatus used for deposition of tertiary particles;

Fig. 4: High resolution TEM image of 2 neighboring particles connected by a silica bridge that formed during chemical vapor deposition of tetraethoxysilane;

Fig. 5(b): Sketch of a solid-liquid-air 3-phase contact line;

Fig. 5(c): AFM height image of a superhydrophobic surface; the flat glass substrate appears dark and the particles forming a second layer as white; Scanning size: 10 μm x 10μm;

Fig. 5(d): Photograph of a 3 μl water droplet deposited on a superhydrophobic surface; the surface shows a static contact angle of 160° and a tiling angle of 5°.

Fig. 6: (a) Transmittance and reflectance spectra of a transparent superhydrophobic surface compared to a bare glass slide; (b) photograph of water droplets deposited on a superhydrophobic glass substrate; (c) Comparison of current-voltage curves of organic solar cells prepared on a glass substrate coated with or without a monolayer of hollow raspberry-like particles;

Fig. 7: SEM images of superhydrophobic surfaces that were partially exposed to double sided tape (white boxes indicate the exposed areas); (a) particles stick to the surface by van der Waals interaction only; (b) particles after binding them chemically to the surface by silica bridges; (c) sketch of the setup used to determine the stability of the surface against sand impact; (d) static contact angle and sliding angle measured after annealing the samples for 10 hours at different temperatures.

Fig. 8: (a) SEM image of PS particles homogeneously decorated by silica nanoasperities. The silica particles are formed during chemical vapor deposition of TES and have grown to a size of 40 ± 10 nm within 24 hours. (b) SEM images of a layer of sedimented μm-sized raspberry-like particles after chemical vapor deposition of TES. (a) The irregularly arranged raspberry particles are partially decorated with 50 to 100 nm-sized silica spheres. (c) The raspberry particles are homogeneously coated with silica nanoasperities, white dots.

Fig. 1 is a schematic sketch displaying a section of a cross-section through a layer according to the invention. The section shows two raspberry-like particles 1, 1' linked to each other by a bridge 2 formed of inorganic material. Each of the raspberry-like particles 1, 1' comprise a core 3 defining a core surface 4. The core 3 may be formed by a polymer particle acting as primary particle. The core has a rounded shape and has according to the sketch the form of a sphere. On the core surface are arranged secondary particles 5 that also have a rounded shape, here the shape of a hemisphere. The secondary particles 5 define a secondary particle surface 6. On the core surface 4 as well as on secondary particle surface 6 are arranged tertiary particles 7. Bridge 2 has a thickness T as determined at the center between core surfaces 4 of adjacent raspberry-like particles 1, 1' and length L as determined as the distance between core surfaces 4 of adjacent raspberry-like particles 1, 1'. Core 4 has a maximum diameter $2R_1$, secondary particles 5 have a maximum diameter $2R_2$ and tertiary particles have a maximum diameter $2R_3$. $R_1 > R_2 > R_3$.

Fig. 2 sketches hybrid and coated raspberry-like particles, as well as their hollow counterparts. The particles posses two length scales and optionally three length scales. In fig. 2 core, secondary particles and tertiary particles all have a spherical shape. However neither core nor secondary or tertiary particles need to be spherical.

Poly styrene (PS)-particles (core) 8 with a negative surface charge caused by the acrylic acid comonomer are dispersed in water and tetraethoxysilane and ammonia are added to the suspension. Small isolated secondary particles 5 are formed on the PS-particle 8 surface by hydrolysis and condensation of tetraethoxysilane catalyzed by ammonia to obtain hybrid raspberry-like particle 9. Depending on the amount of acrylic acid comonomer comprised in PS-particle 8 and on the amount of tetraethoxysilane isolated secondary particles 5 are formed (route (a)) or a large number of secondary forms that grow together to form a shell (route (b)). After charge reversal from negative to positive by adding polyallylamine hydrochloride another Stöber reaction is performed (route (c)), respectively, which results in formation of a continuous homogeneous shell 10 surrounding core 3 formed by PS-particle 8 to obtain a coated raspberry-like particle 11.

To remove core 8 the filled raspberry-like particle are calcined in air to obtain hollow raspberry-like particles (route (d)). Calcination may be performed with different types of raspberry-like particles. Before calcination a stable shell comprising secondary particles should have been formed to obtain sufficient mechanical stability of the hollow raspberry-like particles. The polymer particle 8 forming the core may be removed directly after formation a shell of secondary

particles which have grown together to form a mechanically stable shell. However, it is also possible to first add an additional thin silica layer to from a shell (route (c)) to then remove the shell.

Hybrid 9 or coated raspberry particles 11 may be used directly for formation of a superhydrophobic layer on a substrate surface.

Tertiary particles of a further length scale may be added to the surface of coated raspberry particle 11 in that tertiary silica particles 7 are formed on the surface of the coated raspberry-like particles 11 by chemical vapor deposition of tetraethoxysilane catalyzed by ammonia (route (e)). Bridges (not shown) may be formed concurrently with formation of tertiary particles 7. After deposition of tertiary particles it is possible to remove core 8, e.g. in a calcination step in air.

Fig 2b shows TEM (f,g) and SEM (a-e) images of hybrid and coated raspberry-like particles, as well as their hollow counterparts.

Fig. 2b (a) is a SEM image of hybrid raspberry-like particles obtained after deposition of silica secondary particles on a polymer core. The secondary particles are mostly placed spaced apart from each other on the polymer sphere surface and only few of the secondary particles have grown together.

Fig. 2b (b) is a SEM Image of a hybrid raspberry-like particle wherein the core is densely populated by secondary particles. The secondary particles have grown together to form a shell.

Fig. 2b (c) shows a hybrid raspberry-like particle that has formed from a core with an ellipsoidal cross-section.

Fig. 2b (d) shows raspberry-like particles after deposition of a thin silica layer with concomitant formation of bridges between adjacent raspberry-like particles. The structure formed by the secondary particles on the cores is clearly visible.

Fig. 2b (e) is a SEM image of raspberry-like particles with additionally formed tertiary particles on its surface. As can be seen from the enlarged portion, the tertiary particles form a rough surface with a smaller length scale than the secondary particles.

Fig. 2b (f) and (g) show TEM images of hollow raspberry-like particles.

Fig. 3a is a schematic sketch of the deposition of a raspberry-like particle layer onto a substrate. A suspension 12 of raspberry-like particles 1 is dispersed in a suitable solvent, e.g. water or a water mixture. Suspension 12 is placed on a substrate 13.

Two possibilities for reaction pathways towards a layer formed of a network of raspberry-like particles are displayed in fig. 3.

According to a first embodiment, a silane and a catalyst for hydrolysis and condensation of the silane is dissolved in the solvent of suspension 12. During sedimentation of the raspberry-like particles 1, 1' onto the surface of substrate 13 the silane is hydrolyzed and silica bridges are formed between neighbored sedimented raspberry-like particles 1, 1' to form a network 14 of raspberry-like particles 1, 1'. Hydrolysis rate of the silane may be adjusted accordingly by the reaction conditions, e.g. reaction temperature, amount of catalyst, type of silane and water/ethanol ratio of the solvent. After sedimentation and formation of bridges between neighbored raspberry-like particles the remaining solvent is evaporated and hydrophobic groups are attached to the surface of the raspberry-like particles to obtain superhydrophobicity.

According to a second embodiment, raspberry-like particles 1, 1' are first sedimented from suspension 12 onto the surface of substrate 13 as described above and then the solvent is evaporated to obtain a loose layer 15 of raspberry-like particles 1, 1'. In loose layer 15 adjacent raspberry-like particles 1, 1' are held together only by weak forces, e.g. van-der-Waals or electrostatic forces, or entanglements between surface asperities present on the surface of raspberry-like particles 1, 1'. Lose layer 15 therefore cannot withstand mechanical impact. Bridges between neighbored raspberry-like particles as well as tertiary particles on the raspberry-like particles 1, 1' are then formed by chemical vapor deposition of tetraethoxysilane catalyzed by ammonia to obtain a network 14 of raspberry-like particles.

According to a third embodiment the loose layer of raspberry-like particles is prefixed, e.g. by chemical vapor deposition of tetraethoxysilane catalyzed by ammonia. To increase the stability, this layer is placed in a solution permitting silane to be hydrolyzed and silica bridges are formed between neighbored raspberry-like particles. In all three embodiments, the mechanical stability of the bridges can be increased by heating.

In all three embodiments, formation of a network 14 of raspberry-like particles is followed by deposition of a hydrophobic layer, e.g. a layer of a semifluorinated alkyl compound.

To prepare superhydrophobic surfaces, amine terminated glass plates were treated with hydrochloric acid. The positively charged plates were immersed in a dispersion of negatively-charged raspberry-like particles. Electrostatic interactions induce that the particles attach to the surface. Excess particles were removed by rinsing the substrate with purified water, giving rise to a large scale homogeneous but locally irregular coating of the glass substrate with raspberry-like particles. To render the monolayer transparent, the PS cores were removed by thermal degradation at 350 °C in air. So far the coating suffers from poor mechanical stability because the particles are bond to each other and to the substrate only by van-der-Waals interactions. To improve the mechanical stability, a chemical vapor deposition CVD of tetraethoxysilane in the presence of ammonia was performed.

Similar to the Stöber reaction, silica is formed by hydrolysis and condensation of tetraethoxysilane (TES) catalyzed by ammonia. Transmission electron microscopy revealed that after CVD neighboring particles are chemically

bonded to each other and to the surface via silica bridges. Fig. 4 is a TEM image displaying two raspberry-like particles 1, 1' linked to each other by bridge 2.

Imaging the surface by atomic force microscopy (AFM) shows that sometimes a second layer is formed on top of the first one giving rise to island-like asperities with a height between 0.8 μm and 1.5 μm. In fig. 5c is displayed an AFM height image of a superhydrophobic surface. The flat glass substrate appears dark black, the raspberry-like particles forming the first layer light grey and those forming a second layer as white. Scanning size: 10μm×10μm.

After hydrophobization of the surface by vapor deposition of a fluorosilane the surface exhibits remarkable superhydrophobicity with a static contact angle of 160 ° and a sliding angle below 5°. Fig. 5d shows a photograph of a 3μl water droplet deposited on a superhydrophobic surface. The surface shows a static contact angle CA of 160° and a sliding angle of 5°. These findings demonstrate that the water droplet rests on the raspberry-like particles, i.e. the droplet is in the Cassie state and a large amount of air is trapped in the pores between the water droplet and the layer composed of raspberry-like particles.

Fig. 5b schematically displays such state as shown in fig. 5d. On substrate 13, here a glass plate, are arranged raspberry-like particles 1, 1'. On top of raspberry-like particles 1, 1' is situated water droplet 18 such that air 19 is trapped in a space formed by substrate 13, raspberry-like particles 1, 1' and water droplet 18.

The raspberry-like particles monolayer has extraordinary water repellency. When repeatedly adding tiny amounts (0.002 μl to 0.09 μl) of water to a 4 μl large water droplet resting on a superhydrophobic surface formed by a raspberry-like particles monolayer, merging of both droplets reduces the overall surface energy. The released energy is converted into kinetic energy, resulting in visible vibrations of the droplet, going in hand with detachment of the droplet from the substrate.

The surface is not only water repellent but also self-cleaning as demonstrated by water droplets falling from 6.5 cm height on a sand polluted superhydrophobic surface. The sand is partially flushed away and partially enwrapped into the water during impacting the surface. After the droplets rebounced and roll off the surface the impacting area is clean.

According to UV-VIS spectra the transmittance of the superhydrophobic surface is enhanced in the short (330 nm to 410 nm) and hardly altered in the long-wavelength range as compared to bare glass slides. Fig. 6a, left axis shows transmittance and reflectance spectra of a transparent superhydrophobic surface compared to a bare glass slide. The specular reflection was measured at an incidence angle of 15°. The increased transmittance is going in line with a strongly reduced reflectivity for short wavelengths. Notable, the whole spectrum shows a reduced reflectivity compared to bare glass and, in most of the visible range, it is decreased by more than a factor of two (Fig. 6a, right axis). The high transparency of the substrate is reflected in the good readability of the letters underneath and its superhydrophobicity is reflected in the high contact angle of water droplets carefully deposited on it. Fig. 6b shows photograph of water droplets deposited on a superhydrophobic glass substrate.

To demonstrate that the self-cleaning properties and good transmission for light is beneficial for solar cells if the coating can be easily applied and does not affect its quantum efficiency, an organic cell was prepared directly on the backside of a transparent superhydrophobic surface (see insert of fig. 6c). The current versus voltage I-V curve of an organic solar cell prepared on bare and superhydrophobic glass are identical within experimental accuracy. Fig. 6c displays a comparison of current-voltage curves of organic solar cells prepared on a glass substrate coated with or without a monolayer of porous silica capsules, i.e. hollow raspberry-like particles. To make sure that the preparation or the solar cell does not decrease superhydrophobicity, the static contact angle and the sliding tilting angle were measured afterwards. The surface keeps its superhydrophobicity as can be seen from its high static contact angle (fig. 6d) and tilting angle of less than 5°.

To check the thermal resistance of the superhydrophobic surfaces, the superhydrophobic surfaces were annealed at temperatures between 20 °C and 400 °C for 10 hours and then the static CA and sliding angle were measured after each annealing step. Superhydrophobicity remained until 350 °C (fig. 7d), showing the excellent thermal stability of the fluorosilane coating and the silica shells. The surface remains superhydrophobic until annealing at 350°C.

To quantify the mechanical stability of the surface, two complementary tests were performed. Firstly, double sided adhesive tape was pressed to the surfaces with approx. 10 kPa, both, before and after performing CVD of TES. In case were the particles are attached to the surface by van-der Waals interactions only a sharp boundary is visible, separating areas that were and were not exposed to tape. After peeling the tape off the area underneath it is almost particle free, substantiate the poor adhesion of the particles to the substrate (white box in fig. 7a). Contrary, peeling the tape off does not change the particle coverage if CVD of TES was performed beforehand (Fig. 7b).

To demonstrate the stability of the thin silica shells the minimal velocity to induce bursting was quantified by letting 100 to 300 μm sized sand particles impact on the surface and determining the height, where the impact induced bursting of the thin silica shells. Fig. 7c shows a sketch of the setup used to determine the stability of the surface against sand impact.

According to SEM the shells remain integer for impact heights, h, up to 30 cm.

To investigate whether CVD of TES can also be used to decorate polymer lattices with silica nanoasperities, PS particles were exposed to CVD of TES. SEM images (LEO 1530 Gemini, Oberkochen, Germany) show that the silica

nanoasperities also grow on PS particles. In Fig. 8(a) silica nanoparticles are visible as white dots homogeneously decorating the PS particles. After 24 h they have grown to a size of 35 ± 10 nm.

To demonstrate the effect of the nanoasperities on the contact angle films were prepared according to the procedure described above (see sketch Fig.3). Sedimented multilayers of raspberry particles are exposed to THF vapor. Half of the films were exposed to CVD of TES. Both the silica surfaces and the polymer bridges were decorated with silica nano-hemispheres, Fig.8c. The films were hydrophobized by exposure to perfluorooctyldimethylchlorosilane, a fluorosilane that provides one anchoring group to the silica substrate. This is done to exclude crosslinking of the silane. Most samples possessing double scale roughness showed contact angle hysteresis around or even larger than 10°. The third length scale can increase the static contact angle by 5° to 10 ° and decrease hysteresis by 5° to 10°.

Table 2:

| Sample | Static contact angle |
|---|---|
| Without CVD of TES<br>3 days silanization | 97 ± 1 (on 20 drops) |
| With CVD of TES<br>3 days silanization | 106 ± 1 (on 20 drops) |
| Plasma<br>3 days silanization | 96 ± 1 (on 5 drops) |
| CVD TES, Plasma<br>3 days silanization | 115 ± 1<br>on 5 drops |
| Multilayers:<br>double scale roughness | 142 ± 5<br>155 ± 4° |
| Multilayers :<br>triple scale roughness | 153 ± 3<br>159 ± 3 |

Examples:

Particle synthesis:

Polystyrene particles were synthesized by soap-free emulsion polymerization. Milli-Q water (300 ml) was put in a 500 ml three-necked flask equipped with a condenser, a PTFE stirrer, and nitrogen was bubbled for 20 minutes. Acrylic acid (1.4 wt%) and styrene (13.7 g) were added and the mixture was heated at 75°C. After addition of ammonium persulfate (0.11 g) the mixture was stirred for 24 hours at 75°C. The dispersion were cleaned and transferred to ethanol. The radius, R, of the particles was determined by REM, R = 275 ± 5 nm.

Composite particles were obtained by the following procedure: The polystyrene particles (1.5 g, diameter = 800 nm) were dispersed in ethanol (80 ml). Ammonia (6.6 ml) and a mixture of tetraethoxysilane (TES) and ethanol (2 ml TES in 18 ml ethanol) were added under stirring at 250 rpm at room temperature. After 1 day the composite particles were washed in fresh ethanol by 4 consecutive centrifugation steps and transferred to water.

Synthesis of raspberry particles: 1.2 g composite particles were transferred to water and added to a solution of poly(allylamine hydrochloride) (PAH) (0.06 g) and NaCl (0.12 g) dispersed in water (60 ml). After 1 h under stirring, the dispersion was washed and transferred to ethanol. Ammonia (6.6 ml) and TES (0.8 ml) were added. After 1 day under stirring the raspberry particles were washed several times with milli-Q water.

Substrate preparation

Glass microscope slides were washed in acetone and ethanol for 15 minutes, while regularly sonicated, and dried under nitrogen atmosphere. The cleaned slides were placed in a plasma cleaner for 10 minutes. The amino-terminated slides were obtained by dipping freshly cleaned glass slides into a 1 wt.% solution of (3-aminopropyl)trimethoxysilane dispersed in toluene for 30 min at 60±1 °C. Then the slides were washed five times with toluene and dried under a $N_2$ stream. The negative charge of the glass plate was reversed after immersion in 0.1N hydrochloric acid solution for 30 minutes, causing protonation of the silanized surface. The substrates were finally rinsed with milli-Q water and dried under nitrogen atmosphere.

Monolayer assembly

The positive charged glass slides were dipped in the particle suspension (5 g/L) for 30 minutes and rinsed with water for 3 times to remove excessive particles. The particles on backside of the slide were removed with a tissue. After drying the slides in clean air the particle coated slides were annealed at 350 °C for 2 hours to remove the polystyrene core.

Preparation of the superhydrophobic films.

The concentration of the raspberry particles in water was 9 g/L. 0.356 ml of the dispersion was put in a home-made vessel with a glass plate (diameter: 1.5 cm) and removable teflon walls. Water was evaporated at 50 °C for ~ 5 h. Dried multilayers were exposed to THF vapor for 3 hours and residual THF was removed under vacuum.

Chemical vapor deposition CVD of TES

The slides were placed in an exsiccator together with 2 vessels containing 1 ml TES and 1 ml ammonia, respectively. CVD of TES was performed for 24 hours. Thereafter, the slides were placed in a vacuum chamber for 12 hours to remove excess TES and ammonia.

Chemical vapor deposition of silane

CVD of tridecafluoro-1,1,2,2-tetrahydrooctyl-1-trichlorosilane was performed in an exsiccator. 0.5 ml of the semifluorinated silane was put in a small glass vessel placed next to the slides. CVD was performed for 3 hours. To remove unreacted residuals the plates are left in a vacuum chamber over night.

Characterization

The morphology of the particles and the monolayer was characterized by Scanning Electron Microscopy (SEM, LEO 1530 Gemini, Oberkochen, Germany) and Atomic Force Spectroscopy (Veeco Metrology Group, Plainview, NY). The tapping-mode images were performed using silicon probes (OMLC-AC 160 TS, Olympus, Japan) with a tip radius less than 20 nm and a resonance frequency of approx. 300 kHz at room temperature. Filled and empty particles as well as silica bridges were investigated by Transmission Electron Microscopy (TEM, Tecnai F20, FEI; 200 kV). Static contact angle and sliding angle were measured with a contact angle meter, Dataphysics OCA35 (Data Physics Instruments GmbH, Germany). For static contact angle, 7 values were recorded for each sample and taking the average of the reported values. The sliding angle was measured at 5 positions after depositing a 5 μl water droplet on the surface and then gradually tilting the slides at a speed of 1.3°/s. Reflectivity and transmission were measured using an ultraviolet-visible spectrometer (Lambda 900, Perkin Elmer) in double-beam mode, using an uncovered glass slide as a reference. The solar cells were tested in an ambient atmosphere of nitrogen. Solar light was simulated using a 575 W metal halide lamp (Lichttechnik, Germany), in combination with an ODF filter, to produce a spectral distribution close to the global radiation AM 1.5G. The light intensity of the simulated solar light was set to 200 $W/m^2$. Incident light was focused on an effective area. Current-voltage (I-V) curves are recorded with a Keithley 236 Source-Measure Unit (Keithley Instruments Inc., USA). A standard silicon diode is used to calibrate the incident light intensity for the calibration of the simulated solar light with measuring range of 200 $W/m^2$. For the sand abrasion test 30 g of commercial sand (diameter = 50 μm ~ 150 μm) impacted the surface from a height of 30 cm, while the substrate was held at 45° to the horizontal surface.

| | |
|---|---|
| 1, 1' | raspberry-like particles |
| 2 | bridge |
| 3 | core |
| 4 | core surface |
| 5 | secondary particles |
| 6 | secondary particle surface |
| 7 | tertiary particles |

8 polystyrene particle

9 hybrid raspberry-like particle

10 shell

11 coated raspberry-like particle

12 suspension of raspberry-like particles

13 substrate

14 network of raspberry-like particles

15 loose layer of raspberry-like particles

16 raspberry-like particles of first layer

17 raspberry-like particles of second layer

18 water droplet

19 air

## Claims

1. Layer formed of raspberry-like particles linked to each other by bridges formed between adjacent raspberry-like particles thereby forming a network of raspberry-like particles, said raspberry-like particles comprising a core with a core surface, said core having a first diameter, wherein on the core surface are located secondary particles having a secondary particle surface, said secondary particles having a second diameter of a smaller size than the first diameter, wherein the bridges linking said raspberry-like particles to each other to form a raspberry-like particle network are composed at least partially of an inorganic material.

2. Layer according to claim 1 or 2, wherein the bridges have an average thickness as defined at the centre between two adjacent raspberry-like particles below 1 μm.

3. Layer according to one of the preceding claims, wherein the average distance D between two adjacent raspberry-like particles linked to each other by a bridge is less than 4R, wherein R is the average radius of the core of said raspberry-like particles.

4. Layer according to one of the preceding claims, wherein the inorganic material of the bridges is the same material as of the secondary particles.

5. Layer according to one of the preceding claims, wherein the layer formed of raspberry-like particles has a thickness in a range of 200 nm to 500 μm.

6. Layer according to one of the preceding claims, wherein on the surface of the secondary particles are located tertiary particles having a tertiary particle surface, wherein the tertiary particles have a third diameter and the third diameter has a smaller size than the second diameter.

7. Layer according to claim 8, wherein the tertiary particle surface has a curvature of a third size, wherein said curvature of a third size is larger than the curvature of a second size.

8. Layer according to one of the preceding claims, wherein the core of the raspberry-like particles has an average diameter within a range of 200 nm to 10 μm, the secondary particles have an average diameter in a range of 20 to 200 nm and the tertiary particles, if present, have an average diameter in a range of 5 to 20 nm.

**9.** Layer according to one of the preceding claims, wherein the secondary particles form a continuous shell surrounding the surface of the core of the raspberry-like particles.

**10.** Layer according to one of the preceding claims, wherein the core of the raspberry-like particles is hollow.

**11.** Layer according to one of the preceding claims, wherein the surface of the raspberry-like particles is hydrophobic.

**12.** Layer according to one of the preceding claims, wherein the inorganic material of said bridges comprises silica.

**13.** Method for manufacturing a layer according to one of claims 1 to 12, wherein:

- a substrate with a substrate surface is provided;
- raspberry-like particles are deposited on at least parts of the substrate surface, and
- bridges of inorganic material are chemically formed between the raspberry-like particles thereby forming a network of raspberry-like particles.

**14.** Method according to claim 13 or 14 wherein polymer particles are deposited on at least parts of the substrate surface in a mixture with the raspberry-like particles.

**15.** Method according to claim 13 or 14 wherein the bridges of inorganic material are formed by chemical vapour deposition of the inorganic material.

**16.** Method according to claim 13 or 14 wherein said raspberry-like particles are dispersed in a solvent to form a suspension, a precursor material of the inorganic material is dissolved in said solvent, the raspberry-like particles are deposited from said suspension onto the surface of the substrate and the precursor material of the inorganic material is reacted to form bridges of inorganic material between said raspberry-like particles to form a network of raspberry-like particles.

**17.** Method according to one of claims 13 to 16 wherein after formation of the bridges hydrophobic molecules are linked to the surface of the network of raspberry-like particles either by a chemical reaction or by a physical absorption process.

**18.** Method according to claim 17 wherein the hydrophobic molecules comprise an anchor group, preferable units of polyethylenoxide and propylenoxide, or amino, mono-, bis- and trisalkoxysilane-, hydroxyl- and acid functions, such as phosphonates, sulfonates or carboxylic functions, and an unpolar group comprising a perfluorinated or partially fluorinated alkyl or aromatic group.

**19.** Method according to one of claims 15 to 18, wherein the layer is removed from the substrate after formation of the raspberry-like particle network.

**20.** Use of a layer according to one of claims 1 to 12 as a superhydrophobic or superoleophobic coating of a substrate surface.

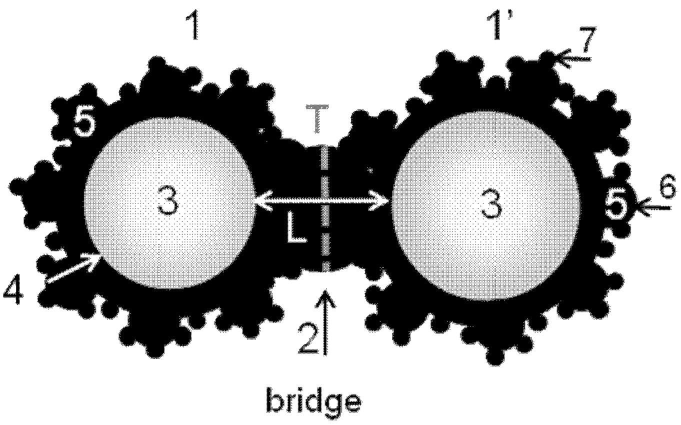


Figure 1

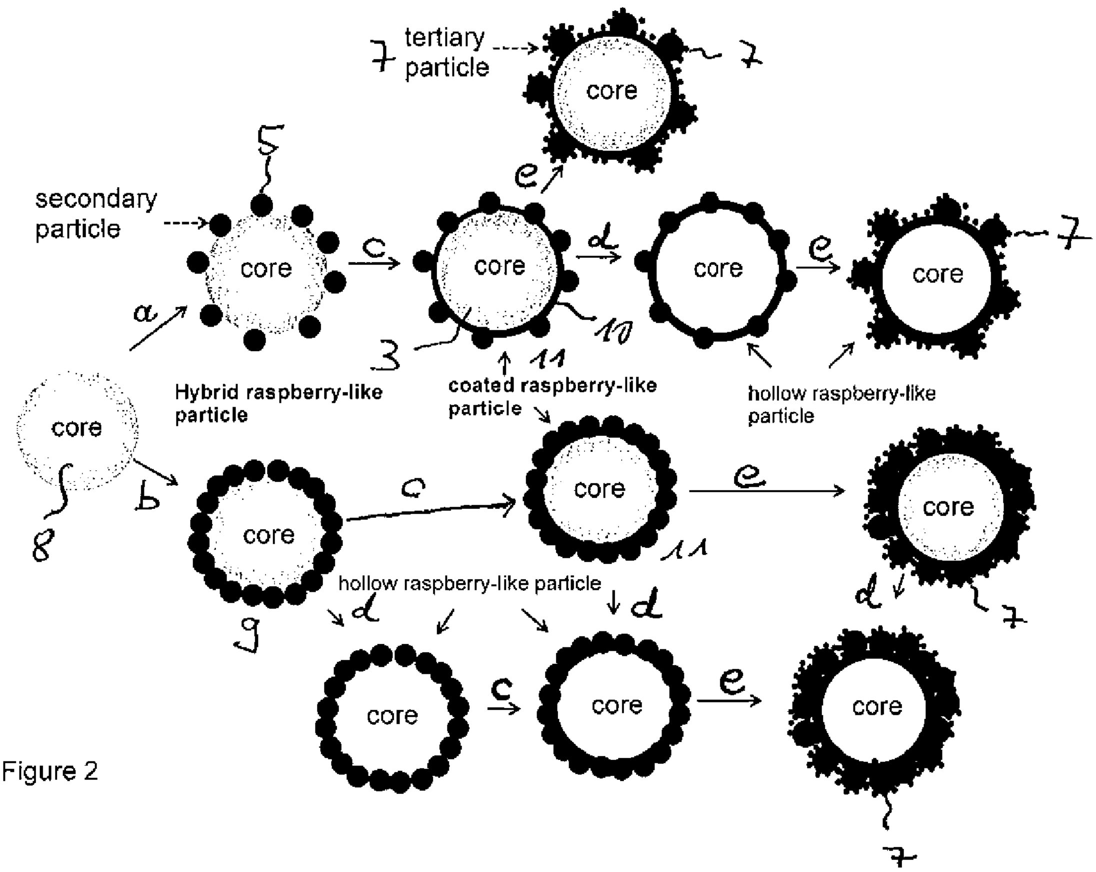


Figure 2

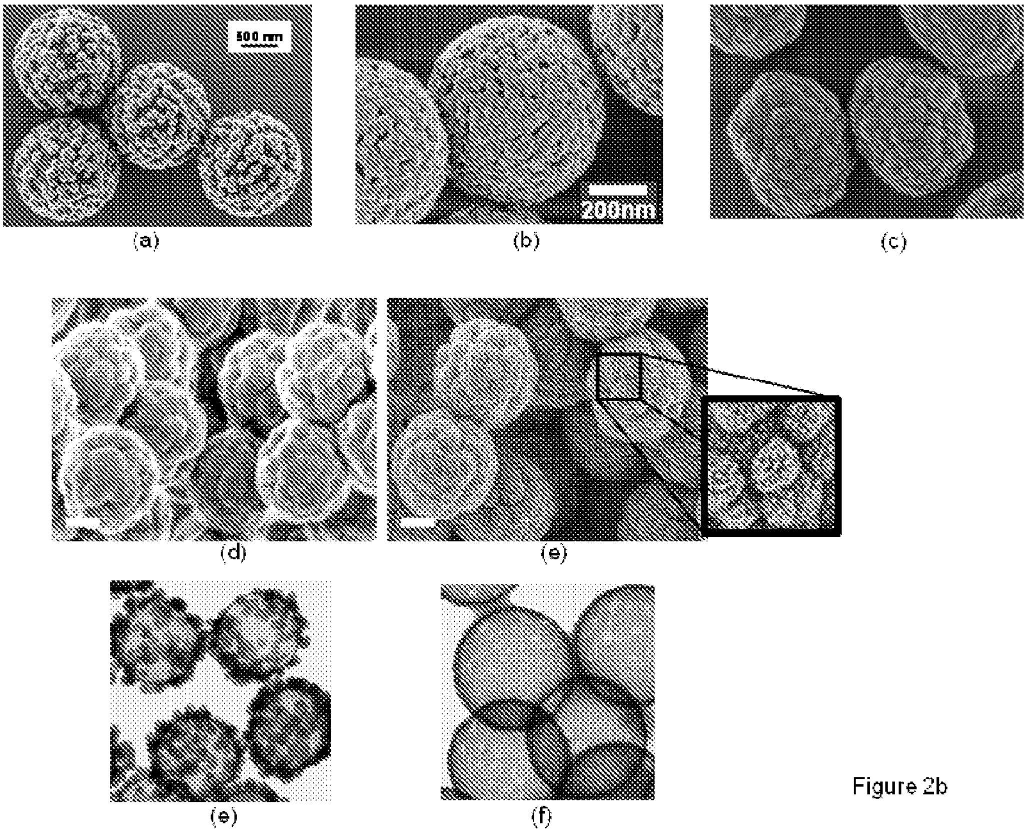


Figure 2b

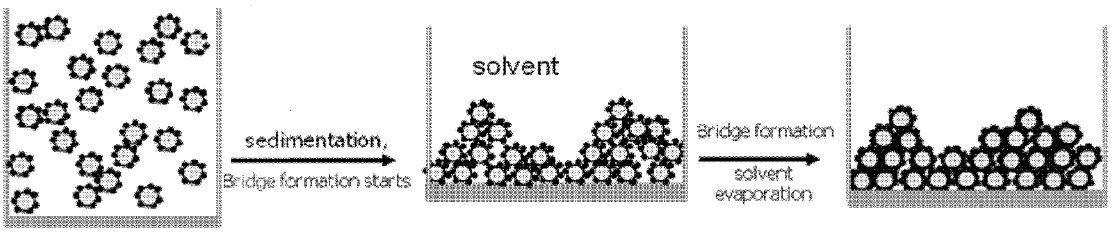


Figure 3a

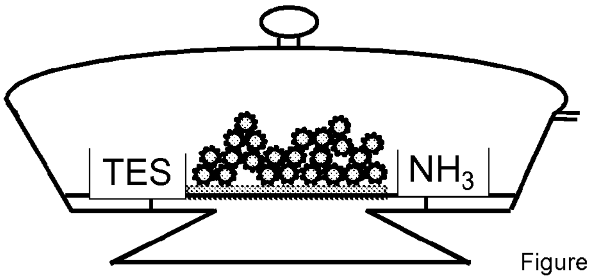


Figure 3b

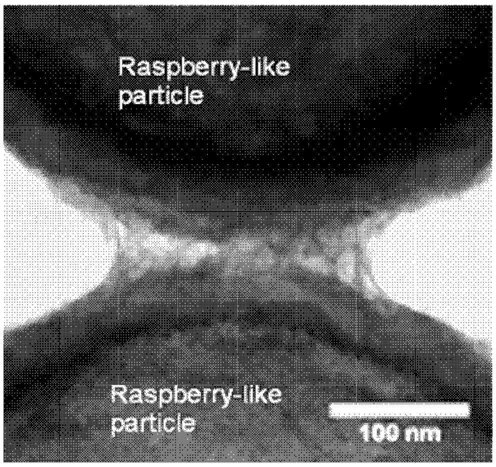


Figure 4

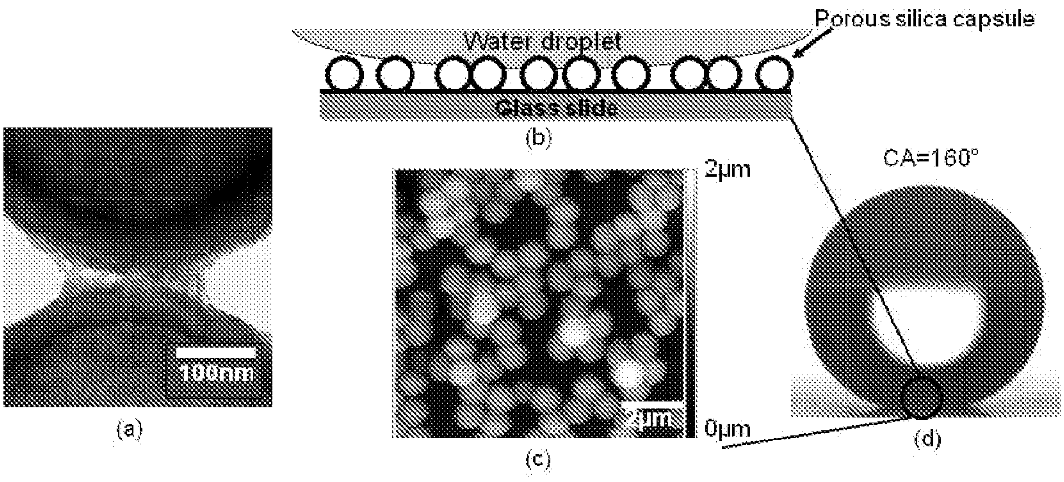


Fig. 5

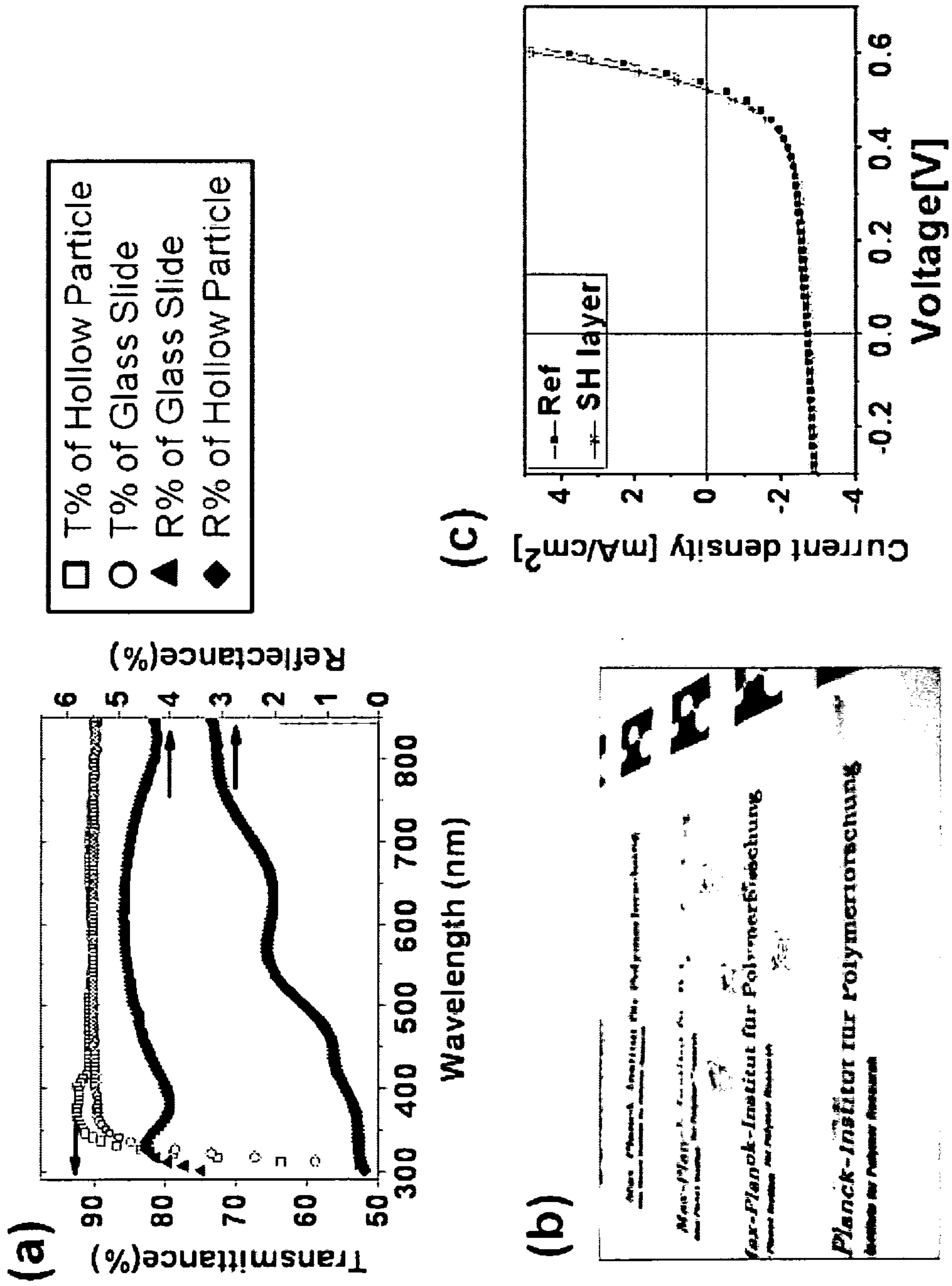
(a)
Transmittance(%)
Reflectance(%)
Wavelength (nm)
T% of Hollow Particle
T% of Glass Slide
R% of Glass Slide
R% of Hollow Particle
(b)
Max-Planck-Institut für Polymerforschung
Planck-Institut für Polymerforschung
(c)
Current density [mA/cm2]
Voltage[V]
Ref
SH layer

Figure 6

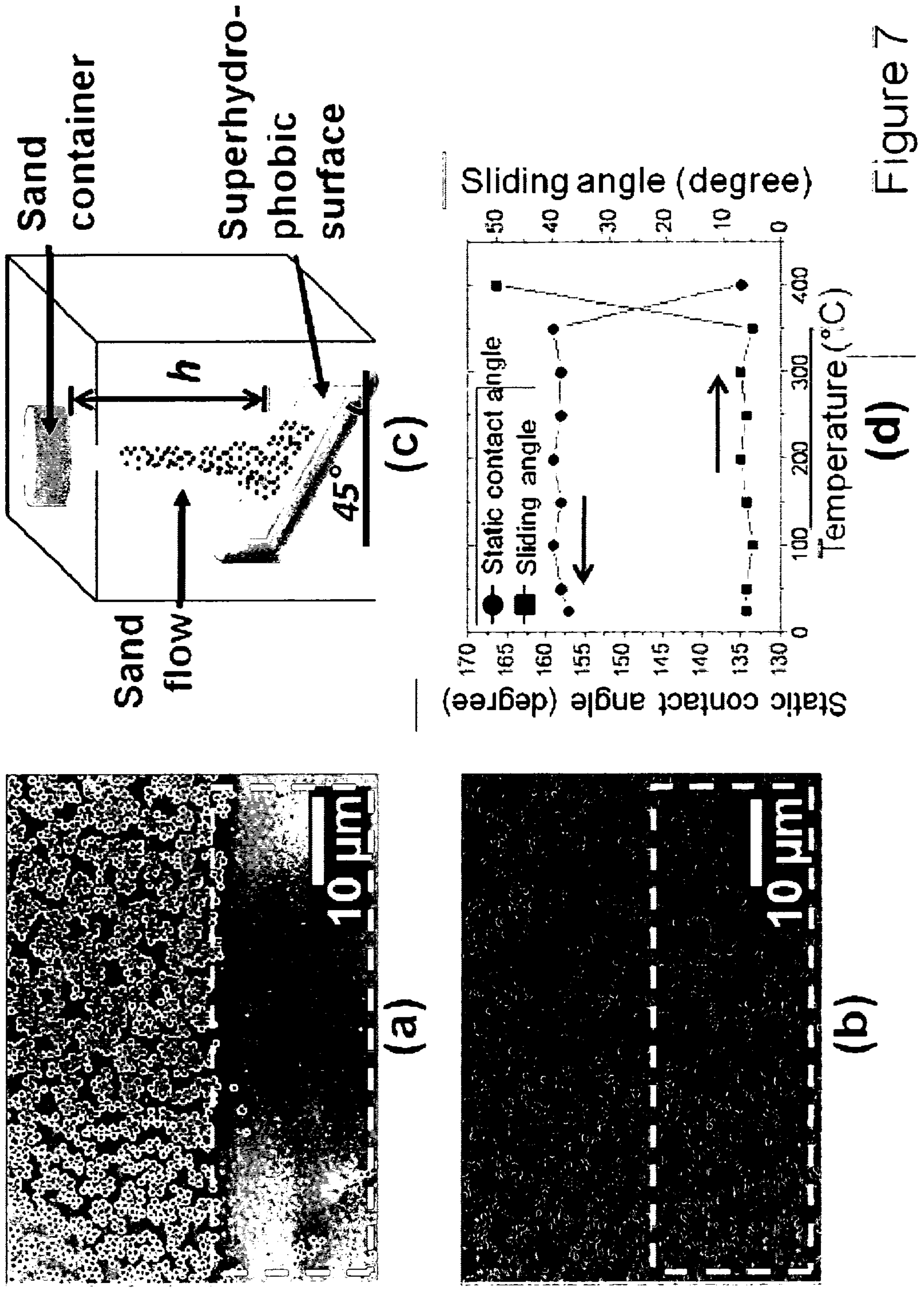
Sand container
Superhydro-phobic surface
Sand flow
h
45°
(c)
Static contact angle
Sliding angle
Sliding angle (degree)
Static contact angle (degree)
Temperature (°C)
(d)
10 µm
(a)
10 µm
(b)

Figure 7

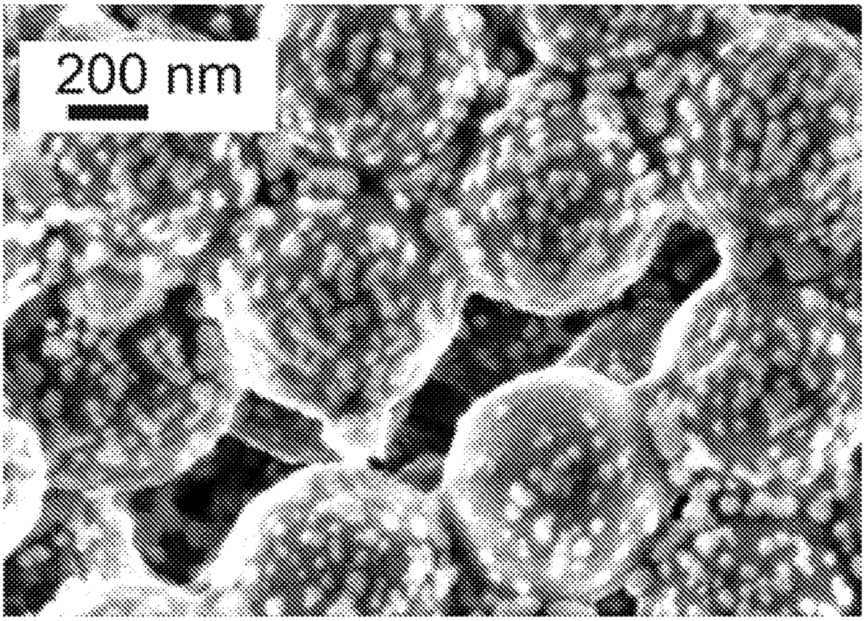


Fig. 8a

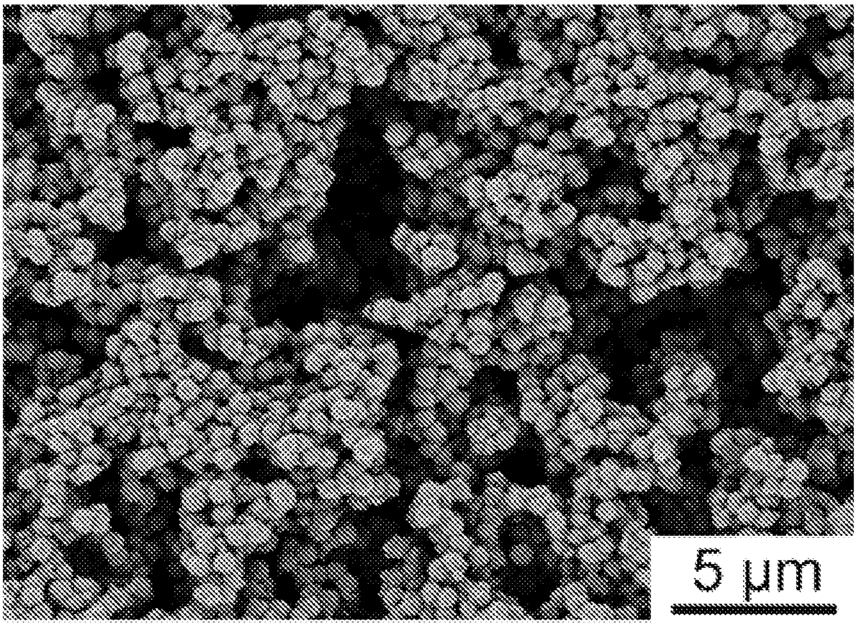


Fig. 8b

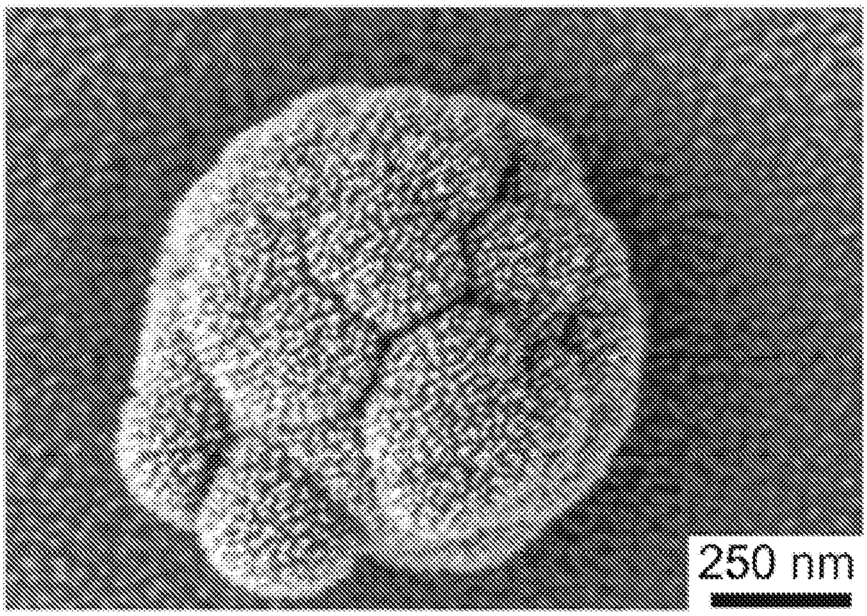


Fig. 8c

Europäisches Patentamt
European Patent Office
Office européen des brevets

# EUROPEAN SEARCH REPORT

Application Number
EP 11 15 3680

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br><br>Y | WO 2006/125589 A1 (DSM IP ASSETS BV [NL]; VAN BENTHEM RUDOLFUS ANTONIUS [NL]; WU DI [NL];) 30 November 2006 (2006-11-30)<br>* figure 1; example 1 *<br>* claims 1-15 *<br>* pages 10-11 *<br>* page 5, lines 14-15 *<br>* page 4, lines 3-15 *<br>* page 8, line 34 - page 9, line 1 *<br>----- | 1-5,8,9, 11-20<br><br><br>6,10 | INV.<br>C09D5/16<br>C09D7/12<br>B05D5/08<br>B08B17/06<br>C09K3/14 |
| Y | ZHEN QIAN,ZHICHEN ZHANG: JOURNAL OF MATERIALS CHEMISTRY, vol. 19, 22 January 2009 (2009-01-22), pages 1297-1304, XP000002658411, DOI: 10.1039/b810808k<br>* the whole document *<br>----- | 6 | |
| Y,D | DATABASE INSPEC [Online] THE INSTITUTION OF ELECTRICAL ENGINEERS, STEVENAGE, GB; 2010, D'ACUNZI M ET AL: "Superhydrophobic surfaces by hybrid raspberry-like particles", XP000002658420, Database accession no. 11996339<br>* abstract *<br>& FARADAY DISCUSSIONS ROYAL SOCIETY OF CHEMISTRY UK, vol. 146, 5 May 2010 (2010-05-05), pages 35-48, ISSN: 1359-6640, DOI: DOI:10.1039/B925676H<br>----- | 10 | TECHNICAL FIELDS SEARCHED (IPC)<br>C09K<br>B05D<br>B08B<br>C09D<br>C23C |
| Y | EP 1 591 509 A1 (SANNER LUTZ P [DE]) 2 November 2005 (2005-11-02)<br>* the whole document *<br>----- | 10 | |

The present search report has been drawn up for all claims

| Place of search | Date of completion of the search | Examiner |
|---|---|---|
| The Hague | 8 September 2011 | Yildirim, Zeynep |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

4

EPO FORM 1503 03.82 (P04C01)

## ANNEX TO THE EUROPEAN SEARCH REPORT ON EUROPEAN PATENT APPLICATION NO. EP 11 15 3680

This annex lists the patent family members relating to the patent documents cited in the above-mentioned European search report.
The members are as contained in the European Patent Office EDP file on
The European Patent Office is in no way liable for these particulars which are merely given for the purpose of information.

08-09-2011

| Patent document cited in search report | Publication date | Patent family member(s) | Publication date |
|---|---|---|---|
| WO 2006125589 A1 | 30-11-2006 | AT 408638 T | 15-10-2008 |
| | | AU 2006251389 A1 | 30-11-2006 |
| | | CA 2609542 A1 | 30-11-2006 |
| | | CN 101233173 A | 30-07-2008 |
| | | DK 1883669 T3 | 02-02-2009 |
| | | EP 1726609 A1 | 29-11-2006 |
| | | EP 1883669 A1 | 06-02-2008 |
| | | ES 2314914 T3 | 16-03-2009 |
| | | JP 2008542458 A | 27-11-2008 |
| | | US 2009104347 A1 | 23-04-2009 |
| EP 1591509 A1 | 02-11-2005 | DE 102004020961 A1 | 24-11-2005 |
| | | WO 2005105332 A1 | 10-11-2005 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20100203287 A1

### Non-patent literature cited in the description


- **WENZEL.** *Ind. Eng. Chem.,* 1936, vol. 28, 988-994
- **CASSIE ; BAXTER.** *Trans. Faraday Soc.,* 1944, vol. 40, 0546-0550
- **X.Y.LING ; I.Y.PHANG ; G.J. VANSCO ; J. HUSKENS ; D.N. REINHOUDT.** *Langmuir,* 2009, vol. 25, 3260-3263
- **T.VERHO ; C. BOWER ; P. ANDREW ; S. FRANSSILA ; O. IKKALA ; R.H.A.RAS.** *Adv.Mater.,* 2011, vol. 23, 673-678
- **M. D'ACUNZI ; L. MAMMEN ; M. SINGH ; X. DENG ; M. ROTH ; G.K. AUERNHAMMER ; H.-J. BUTT ; D. VOLLMER.** *Faraday Dicuss.,* 2010, vol. 146, 35-48